# EUROPEAN PATENT APPLICATION

(11) **EP 4 439 741 A2**
(43) Date of publication of application: **02.10.2024**
(21) Application number: 24162401.4
(22) Date of filing: 08.03.2024
(51) Int. Cl.: H01M 8/04089, H01M 8/04119, H01M 8/04537, H01M 8/04746, H01M 8/249, H01M 8/10

(54) **FUEL CELL SYSTEM**

(30) Priority: 28.03.2023 JP 2023052214
(71) Applicant: TOYOTA JIDOSHA KABUSHIKI KAISHA, Aichi-ken 471-8571 (JP)
(72) Inventor: SATO, Kenji, Toyota-shi, 471-8571 (JP); OKUMURA, Makito, Toyota-shi, 471-8571 (JP); YASUNAGA, Mikio, Toyota-shi, 471-8571 (JP)
(74) Representative: J A Kemp LLP

(57) **Abstract**

A supply path (22) of hydrogen gas in a fuel cell system (1) connects a plurality of fuel cell stacks (10A, 10B) in series with each other. The supply path (22) includes a downstream supply path (22B) configured to supply the fuel cell stack (10B) on a downstream side with exhaust gas of hydrogen gas supplied to the fuel cell stack (10A) on an upstream side, without circulating the exhaust gas to the fuel cell stack (10A) on the upstream side, and a circulating path (24B) configured to circulate exhaust gas from the fuel cell stack (10B) on the downstream side to the fuel cell stack (10B) on the downstream side.

## Description

### BACKGROUND OF THE INVENTION

### 1. Field of the Invention

The invention relates to a fuel cell system including a fuel cell stack to which hydrogen gas is supplied.

### 2. Description of Related Art

As a technology of this type, a fuel cell system including a plurality of fuel cell stacks to which hydrogen gas is supplied is suggested in Japanese Unexamined Patent Application Publication No. 2021-086686 (JP 2021-086686 A). The fuel cell system has a supply path for hydrogen gas in the fuel cell stacks. The supply path connects the fuel cell stacks in parallel with each other. In the supply path for hydrogen gas, an adjusting device (injector) that adjusts the flow rate of hydrogen gas from a tank filled with hydrogen gas is provided upstream of each of the fuel cell stacks.

### SUMMARY OF THE INVENTION

However, when the fuel cell stacks are provided as described in JP 2021-086686 A, each of the fuel cell stacks is required to have an equivalent function. Therefore, a device configuration including the supply path to supply hydrogen gas to the fuel cell stacks is complicated.

The invention provides a fuel cell system capable of generating electric power by using a plurality of fuel cell stacks with a simpler device configuration.

An aspect of the invention provides a fuel cell system. The fuel cell system includes a plurality of fuel cell stacks to which hydrogen gas is supplied, and a supply path of the hydrogen gas. The supply path connects the plurality of fuel cell stacks in series with each other. The supply path includes a downstream supply path configured to supply the fuel cell stack on a downstream side with exhaust gas of hydrogen gas supplied to the fuel cell stack on an upstream side, without circulating the exhaust gas to the fuel cell stack on the upstream side, and a circulating path configured to circulate exhaust gas from the fuel cell stack on the downstream side to the fuel cell stack on the downstream side.

According to the aspect of the invention, the plurality of fuel cell stacks is supplied with hydrogen gas via the supply path. Here, in the supply path, the downstream supply path supplies the fuel cell stack on the downstream side with exhaust gas of hydrogen gas supplied to the fuel cell stack on the upstream side, without circulating the exhaust gas to the fuel cell stack on the upstream side. In other words, hydrogen gas having passed through the fuel cell stack on the upstream side is straightly supplied to the fuel cell stack on the downstream side. Hydrogen gas with a flow rate required for power generation of the fuel cell stack on the downstream side flows through the fuel cell stack on the upstream side. Therefore, no circulating path for circulating hydrogen gas is needed for the fuel cell stack on the upstream side. Furthermore, in the supply path, the circulating path circulates exhaust gas from the fuel cell stack on the downstream side to the fuel cell stack on the downstream side. As a result, hydrogen gas in exhaust gas having circulated through the circulating path and hydrogen gas in exhaust gas from the fuel cell stack on the upstream side are supplied to the fuel cell stack on the downstream side, so hydrogen gas with a stable flow rate is supplied to the fuel cell stack on the downstream side. In this way, the circulating path just needs to be provided only for the fuel cell stack on the downstream side, so it is possible to generate electric power by using the plurality of fuel cell stacks with a simpler device configuration. Thus, it is possible to reduce manufacturing costs for the fuel cell system.

Furthermore, since hydrogen gas is caused to flow through the fuel cell stack on the upstream side without circulation, impurities, such as nitrogen gas and vapor on a cathode side, do not circulate to flow into the fuel cell stack on the upstream side. Therefore, emission or the like of exhaust gas flowing through the fuel cell stack on the upstream side due to impurities does not need to be performed. Thus, hydrogen gas contained in exhaust gas can be effectively used in the fuel cell stack on the downstream side.

In the above aspect, the supply path may include an upstream supply path configured to supply hydrogen gas to the fuel cell stack on the upstream side from a supply source of hydrogen gas, and the fuel cell system may further include an adjusting device provided only in the upstream supply path and configured to adjust a flow rate of hydrogen gas.

According to the above aspect, the adjusting device configured to adjust the flow rate of hydrogen gas is provided only in the upstream supply path. In other words, when the amount of hydrogen gas that can be used by the fuel cell stack on the downstream side to generate electric power is adjusted by the adjusting device in the upstream supply path, no adjusting device configured to adjust the flow rate of hydrogen gas needs to be provided in the downstream supply path. Thus, it is possible to generate electric power by using the plurality of fuel cell stacks with a simpler device configuration.

In the above aspect, the fuel cell system may further include a gas-liquid separator disposed in the downstream supply path and configured to separate moisture contained in the exhaust gas, from the exhaust gas.

According to the above aspect, it is possible to separate moisture from exhaust gas emitted from the fuel cell stack on the upstream side with the gas-liquid separator in the downstream supply path. Thus, it is possible to reduce flow of moisture of exhaust gas into the fuel cell stack on the downstream side.

In the above aspect, the fuel cell system may further include a measuring device provided only in the fuel cell stack on the downstream side and configured to measure voltages of fuel cells that are components of the fuel cell stack on the downstream side.

According to the above aspect, hydrogen gas with a flow rate required for power generation of the fuel cell stack on the downstream side flows through the fuel cell stack on the upstream side. It is conceivable that, before hydrogen gas supplied to the fuel cells of the fuel cell stack on the upstream side becomes insufficient, hydrogen gas supplied to the fuel cells of the fuel cell stack on the downstream side becomes insufficient. Therefore, the voltages of only the fuel cells of the fuel cell stack on the downstream side just need to be measured by using the measuring device to find a decrease in power generation efficiency of the fuel cells of the fuel cell stack on the downstream side due to insufficient hydrogen gas. In this way, no measuring device configured to measure voltages of the fuel cells needs to be provided for the fuel cell stack on the upstream side, so it is possible to provide a simpler device configuration.

According to the aspect of the invention, it is possible to generate electric power by using the plurality of fuel cell stacks with a simpler device configuration.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic conceptual view of a fuel cell system according to a first embodiment;
FIG. 2 is a schematic conceptual view of a fuel cell system according to a second embodiment; and
FIG. 3 is a schematic conceptual view of a fuel cell system according to a third embodiment.

### DETAILED DESCRIPTION OF EMBODIMENTS

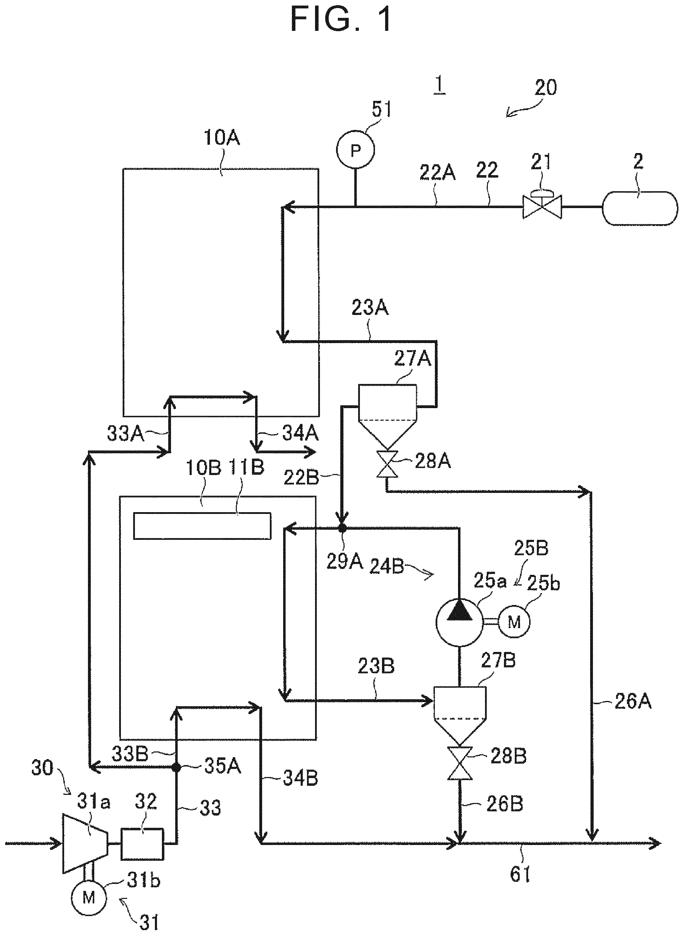

Hereinafter, fuel cell systems according to first to third embodiments will be described with reference to FIG. 1 to FIG. 3. Initially, the basic configuration of the fuel cell systems according to these embodiments will be described.

### First Embodiment

A fuel cell system 1 includes two fuel cell stacks 10A, 10B, a fuel gas line 20, an oxidant gas line 30, other measurement hardware, and the like. The fuel cell stacks 10A, 10B each are a system of a polymer electrolyte fuel cell. However, not limited to a polymer electrolyte fuel cell, fuel cells of other types, such as a solid oxide fuel cell, may be adopted. Each of the fuel cell stacks 10A, 10B has a stack structure in which a plurality of single cells (fuel cells) is stacked. Each of the fuel cell stacks 10A, 10B generates electric power upon receiving fuel gas containing hydrogen and oxidant gas containing oxygen.

In the present embodiment, the fuel cell stacks 10A, 10B are supplied with hydrogen gas and air and generate electric power. When the fuel cell stacks 10A, 10B generate electric power from hydrogen gas and air, produced water is produced and drained.

The fuel cell stacks 10A, 10B each have a structure that single cells are stacked in series. Each single cell has a channel through which hydrogen gas serving as fuel gas flows at an anode side (anode-side channel) and a channel through which air serving as oxidant gas flows at a cathode side (cathode-side channel), via an electrolyte membrane. Although not shown in the drawing, a refrigerant channel through which refrigerant for cooling the insides of the fuel cell stacks 10A, 10B is formed in the fuel cell stacks 10A, 10B.

In the present embodiment, the fuel gas line 20 includes a supply path 22 for supplying hydrogen gas to the fuel cell stacks 10A, 10B, a circulating path 24B, and drain paths 26A, 26B. The supply path 22 connects the two fuel cell stacks 10A, 10B in series. The supply path 22 includes an upstream supply path 22A and a downstream supply path 22B. An injector 21, a circulating pump 25B, gas-liquid separators 27A, 27B, drain valves 28A, 28B, and the like are provided in the supply path 22.

The upstream supply path 22A is a path that supplies hydrogen gas from a tank 2 that is a supply source of hydrogen gas to the fuel cell stack 10A on an upstream side. The downstream supply path 22B is a path that supplies the fuel cell stack 10B on a downstream side with exhaust gas of hydrogen gas supplied to the fuel cell stack 10A on the upstream side, without circulating the exhaust gas to the fuel cell stack 10A on the upstream side. The circulating path 24B is a path that circulates exhaust gas from the fuel cell stack 10B on the downstream side to the fuel cell stack 10B on the downstream side.

The tank 2 is a high-pressure tank filled with hydrogen gas serving as fuel gas. The upstream supply path 22A connects the tank 2 with the fuel cell stack 10A on the upstream side via the injector 21. The injector 21 is an adjusting device provided only in the upstream supply path 22A and used to adjust the flow rate of hydrogen gas. In the present embodiment, exhaust gas (hydrogen off-gas) emitted from the fuel cell stack 10A on the upstream side contains hydrogen gas, and the exhaust gas is supplied to the fuel cell stack 10B on the downstream side.

The injector 21 adjusts the flow rate of hydrogen gas required by the fuel cell stacks 10A, 10B to generate electric power in accordance with a control signal from a controller (not shown). In the present embodiment, electric power is generated by the two fuel cell stacks 10A, 10B. Therefore, the flow rate of hydrogen gas injected from the injector 21 is adjusted by the injector 21 to a flow rate according to the number of fuel cell stacks. For example, in the present embodiment, the flow rate of hydrogen gas is adjusted to a flow rate twice as high as normal (a flow rate according to one fuel cell stack).

In the present embodiment, the injector 21 for adjusting the flow rate of hydrogen gas is provided only in the upstream supply path 22A. When the amount of hydrogen gas that can be used by the fuel cell stack 10B on the downstream side to generate electric power is adjusted by the injector 21 in the upstream supply path 22A, no injector for adjusting the flow rate of hydrogen gas needs to be provided in the downstream supply path 22B. Thus, it is possible to generate electric power by using the fuel cell stacks 10A, 10B with a simpler device configuration.

A pressure sensor 51 is attached between the injector 21 and the fuel cell stack 10A on the upstream side. It is possible to measure the pressure of hydrogen gas supplied to the fuel cell stack 10A on the upstream side with the pressure sensor 51. In accordance with the measured pressure (pressure value) of hydrogen gas, the controller controls the flow rate of hydrogen gas to be supplied by the injector 21 in a feedback manner such that a target flow rate is obtained.

The downstream supply path 22B includes an exhaust path 23A through which exhaust gas of hydrogen gas supplied to the fuel cell stack 10A on the upstream side is emitted. A gas-liquid separator 27A is disposed in the exhaust path 23A. The gas-liquid separator 27A is a device that separates moisture contained in exhaust gas in the exhaust path 23A and that stores the separated moisture.

The drain valve 28A is connected to the gas-liquid separator 27A. The drain valve 28A is an open-close valve. Open and closed states of the drain valve 28A are controlled by the controller (not shown). When the drain valve 28A is open, water stored in the gas-liquid separator 27A is drained to the drain path 26A. The drain path 26A is connected to an exhaust and drain path 61. Water in the drain path 26A is drained to outside the fuel cell system 1 through the exhaust and drain path 61.

The downstream supply path 22B is connected to a confluence point 29A of the circulating path 24B. Exhaust gas from which moisture is separated by the gas-liquid separator 27A contains hydrogen gas not consumed for power generation. Therefore, exhaust gas in the downstream supply path 22B flows into the circulating path 24B via the confluence point 29A and is supplied to the fuel cell stack 10B on the downstream side. In this way, exhaust gas emitted from the fuel cell stack 10A on the upstream side is supplied to the fuel cell stack 10B on the downstream side via the downstream supply path 22B, without circulating the exhaust gas to the fuel cell stack 10A on the upstream side.

In the present embodiment, moisture can be separated from exhaust gas emitted from the fuel cell stack 10A on the upstream side with the gas-liquid separator 27A in the downstream supply path 22B. Thus, it is possible to reduce flow of moisture of exhaust gas into the fuel cell stack 10B on the downstream side.

The circulating path 24B is a path for circulating exhaust gas (hydrogen off-gas) emitted from the fuel cell stack 10B on the downstream side together with exhaust gas (hydrogen off-gas) emitted from the fuel cell stack 10A on the upstream side, to the fuel cell stack 10B on the downstream side as circulating gas. The circulating path 24B is connected to the downstream supply path 22B at the confluence point 29A such that exhaust gas from the downstream supply path 22B merges into circulating gas in the circulating path 24B. Thus, circulating gas having passed through the circulating path 24B is supplied again to the fuel cell stack 10B on the downstream side, and hydrogen gas of exhaust gas from the fuel cell stack 10A on the upstream side is added to circulating gas as fuel gas.

The circulating path 24B includes an exhaust path 23B through which exhaust gas from the fuel cell stack 10B on the downstream side is emitted. The gas-liquid separator 27B is disposed in the exhaust path 23B. The gas-liquid separator 27B is a device that separates moisture contained in exhaust gas in the exhaust path 23B and that stores water coming from the separated moisture.

The drain valve 28B is connected to the gas-liquid separator 27B. The drain valve 28B is an open-close valve. Open and closed states of the drain valve 28B are controlled by the controller (not shown). When the drain valve 28B is open, water stored in the gas-liquid separator 27B is drained to the drain path 26B. The drain path 26B is connected to the exhaust and drain path 61. Water in the drain path 26B is drained to outside the fuel cell system 1 through the exhaust and drain path 61.

In this way, exhaust gas emitted from the fuel cell stack 10B on the downstream side and having passed through the gas-liquid separator 27B is sent to the circulating pump 25B as circulating gas. The circulating pump 25B is provided in the circulating path 24B. The circulating pump 25B includes a pump body 25a disposed downstream of the gas-liquid separator 27B, and a motor 25b that drives the pump body 25a. It is possible to circulate circulating gas through the circulating path 24B by driving the motor 25b in accordance with a control signal from the controller (not shown).

In the present embodiment, it is possible to separate moisture from exhaust gas with the gas-liquid separator 27B while circulating gas (exhaust gas) circulates to the fuel cell stack 10B on the downstream side via the circulating pump 25B. Thus, it is possible to reduce flow of moisture contained in exhaust gas to the fuel cell stack 10B on the downstream side.

In the present embodiment, a cell monitor 11B that monitors the voltages of the single cells of the fuel cell stack 10B on the downstream side is provided only for the fuel cell stack 10B on the downstream side. The cell monitor 11B is a measuring device that measures the voltages of the single cells (fuel cells) that make up the fuel cell stack 10B on the downstream side. In this way, from the voltages of the fuel cells, measured with the cell monitor 11B, it is possible to find a decrease in the power generation efficiency of the fuel cells from a decrease in the concentration of hydrogen gas contained in exhaust gas in the fuel cell stack 10B on the downstream side.

Furthermore, hydrogen gas with a flow rate required by the fuel cell stack 10B on the downstream side to generate electric power flows through the fuel cell stack 10A on the upstream side. It is presumable that hydrogen gas supplied to the fuel cells of the fuel cell stack 10B on the downstream side becomes insufficient before hydrogen gas supplied to the fuel cells of the fuel cell stack 10A on the upstream side becomes insufficient. Therefore, when only the voltages of the fuel cells of the fuel cell stack 10B on the downstream side are measured with the cell monitor 11B, it is possible to find a decrease in the power generation efficiency of the fuel cells of the fuel cell stack 10B on the downstream side due to insufficient hydrogen gas. In this way, no measuring device that measures the voltages of the fuel cells needs to be provided for the fuel cell stack 10A on the upstream side.

The oxidant gas line 30 includes a supply path 33 and exhaust paths 34A, 34B of oxidant gas (air). The supply path 33 connects the fuel cell stacks 10A, 10B in parallel. The supply path 33 includes a branch path 33A that supplies the fuel cell stack 10A with air distributed at a branch point 35A, and a branch path 33B that supplies the fuel cell stack 10B with air distributed at the branch point 35A. The exhaust path 34A emits air emitted from the fuel cell stack 10A. The exhaust path 34B emits air emitted from the fuel cell stack 10B. In the supply path 33, at least an air compressor 31 and an intercooler 32 are provided upstream of the branch point 35A.

The air compressor 31 draws air in atmosphere, discharges air to the fuel cell stacks 10A, 10B, and supplies the fuel cell stacks 10A, 10B with air discharged via the intercooler 32. In the air compressor 31, a motor 31b is connected to a body 31a. The motor 31b is driven in accordance with a control signal from the controller (not shown). The intercooler 32 cools air compressed by the air compressor 31 into a high temperature. The cooled air is distributed between the branch paths 33A, 33B via the branch point 35A.

The exhaust path 34A is a path that emits oxygen off-gas, the oxygen off-gas being a gas obtained from consumption of oxygen by the fuel cell stack 10A. The exhaust path 34B is a path that emits oxygen off-gas, the oxygen off-gas being a gas obtained from consumption of oxygen by the fuel cell stack 10B. A pressure regulating valve may be provided in the exhaust path 34A, and a pressure regulating valve may be provided in the exhaust path 34B. Furthermore, a mist separator or the like that collects moisture in oxygen off-gas may be provided in the exhaust path 34A, and a mist separator or the like that collects moisture in oxygen off-gas may be provided in the exhaust path 34B. Although partially not shown in FIG. 1 in detail, the exhaust paths 34A, 34B are connected to the exhaust and drain path 61, and oxygen off-gas in the exhaust paths 34A, 34B is emitted to outside the fuel cell system 1 through the exhaust and drain path 61.

According to the present embodiment, hydrogen gas is supplied to the two fuel cell stacks 10A, 10B via the supply path 22. Here, in the supply path 22, the downstream supply path 22B supplies exhaust gas of hydrogen gas supplied to the fuel cell stack 10A on the upstream side to the fuel cell stack 10B on the downstream side, without circulating the exhaust gas to the fuel cell stack 10A on the upstream side. In other words, hydrogen gas having passed through the fuel cell stack 10A on the upstream side is straightly supplied to the fuel cell stack 10B on the downstream side.

Hydrogen gas with a flow rate required for power generation of the fuel cell stack 10B on the downstream side flows through the fuel cell stack 10A on the upstream side. Therefore, no circulating path for circulating hydrogen gas is needed for the fuel cell stack 10A on the upstream side.

Furthermore, in the supply path 22, the circulating path 24B circulates exhaust gas from the fuel cell stack 10B on the downstream side to the fuel cell stack 10B on the downstream side. As a result, hydrogen gas in exhaust gas circulating in the circulating path 24B and hydrogen gas in exhaust gas from the fuel cell stack 10A on the upstream side are supplied to the fuel cell stack 10B on the downstream side, so hydrogen gas with a stable flow rate is supplied to the fuel cell stack 10B on the downstream side.

In this way, the circulating path 24B just needs to be provided only in the fuel cell stack 10B on the downstream side, so it is possible to generate electric power by using the two fuel cell stacks 10A, 10B with a simpler device configuration.

Furthermore, since hydrogen gas is caused to flow with no circulation in the fuel cell stack 10A on the upstream side, impurities, such as nitrogen gas and vapor on a cathode side do not circulate to flow into the fuel cell stack 10A on the upstream side. Therefore, emission or the like of exhaust gas flowing through the fuel cell stack 10A on the upstream side due to impurities does not need to be performed. Thus, hydrogen gas contained in exhaust gas can be effectively used in the fuel cell stack 10B on the downstream side. When the percentage of impurities is increased with respect to circulating gas flowing through the fuel cell stack 10B on the downstream side, circulating gas just needs to be emitted through the drain valve 28B by opening the drain valve 28B.

### Second Embodiment

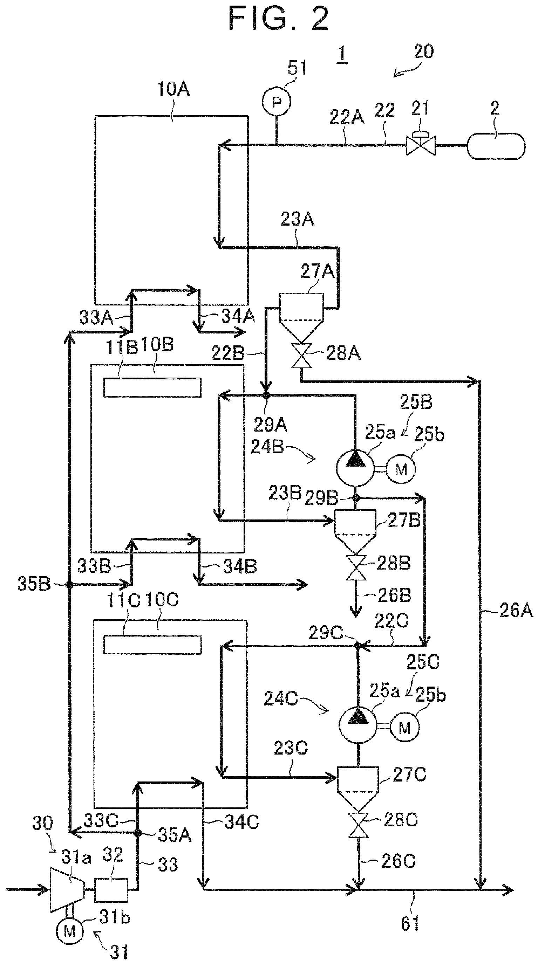

FIG. 2 is a schematic conceptual view of a fuel cell system 1 according to the second embodiment. The fuel cell system 1 according to the second embodiment differs from that of the first embodiment in that a fuel cell stack 10C is further provided. Therefore, like reference signs are assigned to the same components as those of the first embodiment, and the detailed description is omitted. In addition, in the second embodiment, of newly added components, "C" is suffixed to the reference signs of components common to the components of the first embodiment, and the detailed description thereof is omitted.

In the present embodiment, the fuel cell system 1 includes the three fuel cell stacks 10A, 10B, 10C. The supply path 22 connects the three fuel cell stacks 10A, 10B, 10C in series. Therefore, the injector 21 in the supply path 22 adjusts the total flow rate of hydrogen gas required by the three fuel cell stacks 10A, 10B, 10C to generate electric power.

The supply path 22 further includes a downstream supply path 22C in addition to the upstream supply path 22A and the downstream supply path 22B. In the present embodiment, a cell monitor 11C is also provided for the fuel cell stack 10C located at the most downstream side. Furthermore, a circulating path 24C for circulating exhaust gas emitted from the fuel cell stack 10C is provided. The circulating path 24C is a path having a similar function to the circulating path 24B described in the first embodiment. Furthermore, as in the case of the first embodiment, a gas-liquid separator 27C and a circulating pump 25C are provided in the circulating path 24C.

As described above, the supply path 22 further includes the downstream supply path 22C. The downstream supply path 22C supplies exhaust gas from the fuel cell stack 10B on the downstream side further to the fuel cell stack 10C on the downstream side. The downstream supply path 22C branches off from a branch point 29B between the gas-liquid separator 27B provided in the circulating path 24B and the circulating pump 25B and is connected to a confluence point 29C of the circulating path 24C that circulates through the fuel cell stack 10C. The fuel cell stack 10C includes a branch path 33C and an exhaust path 34C, branching off from the branch point 35A of the supply path 33.

According to the present embodiment, when the fuel cell system 1 according to the first embodiment further includes the fuel cell stack 10C, the fuel cell stack 10C and a mechanism of circulating exhaust gas from the fuel cell stack 10C (the circulating path 24C and a device for circulating exhaust gas through the circulating path 24C) just need to be provided. The fuel cell system 1 according to the second embodiment also provides similar advantageous effects to those of the above-described first embodiment.

### Third Embodiment

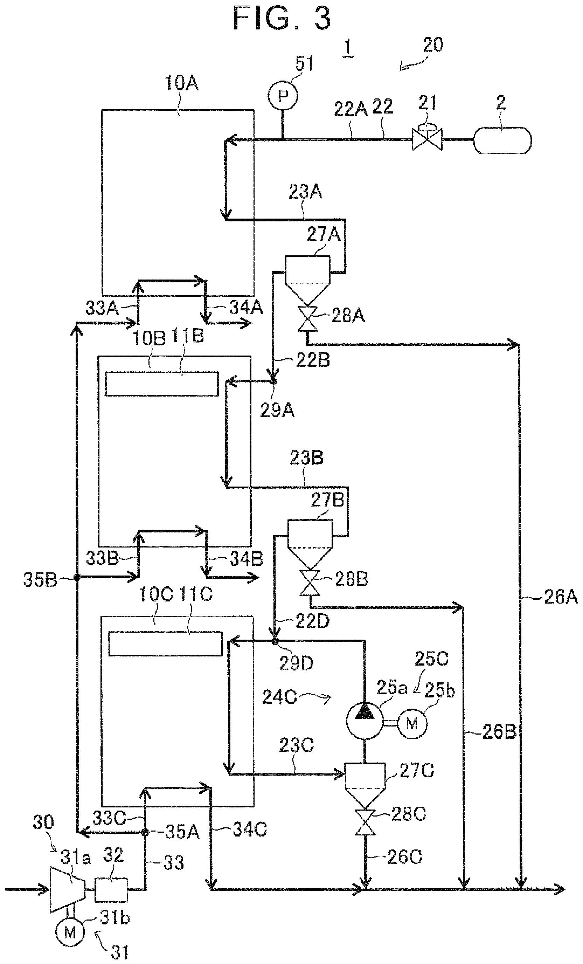

FIG. 3 is a schematic conceptual view of a fuel cell system 1 according to the third embodiment. The fuel cell system 1 according to the third embodiment differs from that of the second embodiment in that the fuel cell stack 10B does not include the circulating path 24B. Therefore, like reference signs are assigned to the same components as those of the second embodiment, and the detailed description is omitted.

In the present embodiment, the supply path 22 includes a downstream supply path 22D. The downstream supply path 22D supplies exhaust gas from the fuel cell stack 10B to the fuel cell stack 10C on the downstream side, without circulating the exhaust gas to the fuel cell stack 10B. The downstream supply path 22D is connected at a confluence point 29D to the circulating path 24C of the fuel cell stack 10C on the downstream side. As in the case of the second embodiment, the circulating path 24C circulates exhaust gas from the fuel cell stack 10C on the downstream side to the fuel cell stack 10C on the downstream side. In this case, the fuel cell stacks 10A, 10B may be regarded as the fuel cell stack on the upstream side according to the aspect of the invention, and the fuel cell stack 10C may be regarded as the fuel cell stack on the downstream side according to the aspect of the invention.

According to the present embodiment, when the fuel cell system 1 according to the first embodiment further includes the fuel cell stack 10C, a mechanism of circulating exhaust gas from the fuel cell stack 10B (the circulating path 24B and a device for circulating exhaust gas through the circulating path 24B) is omitted. Thus, with the fuel cell system 1 according to the third embodiment, it is possible to implement a simple device configuration.

Some embodiments of the invention have been described above; however, the invention is not limited to the embodiments. Various design changes are applicable without departing from the spirit of the invention described in the appended claims.

In the second embodiment, the fuel cell system including three fuel cell stacks has been illustrated. When, for example, the fuel cell system includes four or more fuel cell stacks, a device configuration similar to the fuel cell stack 10C, the circulating path 24C, and the like according to the second embodiment just need to be further provided.

## Claims

1. A fuel cell system (1) comprising:
a plurality of fuel cell stacks (10A, 10B) to which hydrogen gas is supplied; and
a supply path (22) of the hydrogen gas, wherein:
the supply path (22) connects the plurality of fuel cell stacks (10A, 10B) in series with each other; and
the supply path (22) includes
a downstream supply path (22B) configured to supply the fuel cell stack (10B) on a downstream side with exhaust gas of hydrogen gas supplied to the fuel cell stack (10A) on an upstream side, without circulating the exhaust gas to the fuel cell stack (10A) on the upstream side, and
a circulating path (24B) configured to circulate exhaust gas from the fuel cell stack (10B) on the downstream side to the fuel cell stack (10B) on the downstream side.

2. The fuel cell system (1) according to claim 1, wherein:
the supply path (22) includes an upstream supply path (22A) configured to supply hydrogen gas to the fuel cell stack (10A) on the upstream side from a supply source of hydrogen gas; and
the fuel cell system (1) further comprises an adjusting device (21) provided only in the upstream supply path (22A) and configured to adjust a flow rate of hydrogen gas.

3. The fuel cell system (1) according to claim 1, further comprising a gas-liquid separator (27A) disposed in the downstream supply path (22B) and configured to separate moisture contained in the exhaust gas, from the exhaust gas.

4. The fuel cell system (1) according to claim 1, further comprising a measuring device (11B) provided only in the fuel cell stack (10B) on the downstream side and configured to measure voltages of fuel cells that are components of the fuel cell stack (10B) on the downstream side.
